# EUROPÄISCHE PATENTSCHRIFT

(11) **EP 2 500 616 B1**
(45) Veröffentlichungstag und Bekanntmachung des Hinweises auf die Patenterteilung: **22.05.2013**
(21) Anmeldenummer: 12152212.2
(22) Anmeldetag: 24.01.2012
(51) Int. Cl.: F16L 58/00, C23F 13/06, F16L 9/147

(54) **Rohr mit Opferanode**
Pipe with sacrificial anode
Tuyau doté d'une anode sacrificielle

(30) Priorität: 16.03.2011 DE 102011014070
(43) Veröffentlichungstag der Anmeldung: 19.09.2012
(73) Patentinhaber: Hobas Engineering GmbH, 9020 Klagenfurt (AT)
(72) Erfinder: Joussin,Jean Marie, 78510 Triel sur Seine (FR)
(74) Vertreter: Schweiger, Johannes

(56) Entgegenhaltungen:
- WO-A1-2008/033028
- US-A1- 2003 140 977

## Beschreibung

Die vorliegende Erfindung betrifft ein Rohr, insbesondere Kunststoffrohr, zur Aufnahme eines Metallrohres im Inneren des Rohres gemäß Patentanspruch 1.

Bei der Aufnahme von Metallrohren, insbesondere Gasleitungen, in Kunststoffrohre dient die Ummantelung mit dem Kunststoffrohr insbesondere bei unterirdischer Verlegung dazu, die Metallrohre vor mechanischen Beschädigungen zu schützen. Der Korrosionsschutz von Metallrohren wird beispielsweise durch Korrosionsschutzschichten erreicht. Um den Korrosionsschutz von, insbesondere unterirdisch verlegten Rohren aufrecht zu erhalten, werden wegen der besonderen Wartungsarmut Fremdstromanoden verwendet, um einen Schutz der Metallrohre vor Korrosion über einen langen Zeitraum gewährleisten zu können.

Rohre der gattungsgemäßen Art sind in der WO 2008/033028 A1 und der US 2003/140977 A1 gezeigt.

Aufgabe der vorliegenden Erfindung ist es, einen Korrosionsschutz von Metallrohren weniger aufwendig, jedoch über einen langen Zeitraum, zu gewährleisten.

Diese Aufgabe wird mit den Merkmalen des Patentanspruchs 1 gelöst, wobei vorteilhafte Weiterbildungen der Erfindung in den Unteransprüchen angegeben sind.

Der Erfindung liegt der Gedanke zugrunde, ein Rohr, insbesondere Kunststoffrohr, mit einem das Rohr durchsetzenden Korrosionsschutzmittel zum Schutz des im Rohr aufgenommenen Metallrohres vor Korrosion vorzusehen. Hierdurch wird eine sehr platzsparende Unterbringung des Korrosionsschutzmittels in die Rohrwand des Rohrs verwirklicht, wobei das Korrosionsschutzmittel besonders einfach mit dem Rohr herstellbar ist und eine optimale Funktion über einen langen Zeitraum gewährleistet werden kann.

Indem das Korrosionsschutzmittel als Opferanode für das Metallrohr ausgebildet ist, wird der Korrosionsschutz auf einfachste Art und Weise über einen langen Zeitraum realisierbar, ohne dass eine regelmäßige Wartung oder gar Freilegung des Kunststoffrohrs notwendig ist. Auch ist die Beaufschlagung mit einem Fremdstrom überflüssig.

Gemäß einer vorteilhaften Ausführungsform der Erfindung ist vorgesehen, dass die Opferanode mit dem Metallrohr elektrisch leitend verbunden ist, insbesondere durch ein Elektrolyt, vorzugsweise Wasser, Stand und/oder Erde.

Gemäß der Erfindung ist mit Vorteil vorgesehen, dass die Rohrwand mindestens eine Gewindebuchse zur Aufnahme der Opferanode aufweist. Auf diese Weise kann die Opferanode fest mit der Rohrwand verbunden werden, insbesondere durch Kleben oder Schrauben.

Indem die Buchse auch zur Aufnahme von Injektionsdüsen vorgesehen ist, erfüllt die Buchse sogar eine Doppelfunktion, nämlich einerseits das Injizieren von Fluiden, insbesondere Flüssigbeton oder Bentonit, und später, sobald das Kunststoffrohr und das Metallrohr eingebaut werden, die Aufnahme der Opferanode.

Gemäß einer weiteren, vorteilhaften Ausführungsform der Erfindung ist vorgesehen, dass die Opferanode aus einer Grundplatte zur Anlage an einer Rohrinnenwand des Rohrs, einem mit der Grundplatte verbundenen, insbesondere als Gewindestift ausgebildeten, Durchsetzungsabschnitt und einem, insbesondere als Mutter ausgebildeten, Fixiermittel gebildet ist. Hierdurch wird auf einfache Art und Weise eine Verbindung zwischen dem Rohrinneren und dem Rohräußeren geschaffen, wodurch einerseits eine optimale Funktion der Opferanode gewährleistet wird und andererseits eine platzsparende Unterbringung der Opferanode ermöglicht wird. Die Opferanode ragt somit nur ganz geringfügig in das Rohrinnere hinein, so dass der Rohrquerschnitt praktisch nicht verändert werden muss. Der Durchsetzungsabschnitt kann erfindungsgemäß durch Verkleben am Rohr fixiert werden.

Indem mehrere, insbesondere drei, Opferanoden am Umfang des Rohres verteilt vorgesehen sind, wird eine optimierte Funktion der Opferanoden und damit ein perfekter Korrosionsschutz über einen langen Zeitraum erreicht.

In einer besonders vorteilhaften Ausführungsform der Erfindung ist die Opferanode ohne Fremdstrom betreibbar, so dass der Korrosionsschutz ohne Energieaufwand betrieben werden kann.

Gemäß einer weiteren vorteilhaften Ausführungsform der Erfindung die Opferanode aus einem unedlen Metall gebildet und/oder die Opferanode weist ein geringeres elektrochemisches Potential als das Metallrohr auf. Somit wird eine dauerhafte und optimale Funktion der Opferanode gewährleistet. Erfindungsgemäß besonders vorteilhaft ist die Verwendung des oben beschriebenen Rohres, insbesondere Kunststoffrohres, als Vortriebsrohr oder bei Grabenverlegung.

Das Kunststoffrohr wird vorzugsweise als glasfaserverstärktes, insbesondere im Schleuderverfahren hergestelltes, Kunststoffrohr hergestellt. Weitere Vorteile, Merkmale und Einzelheiten der Erfindung ergeben sich aus der Beschreibung bevorzugter Ausführungsbeispiele sowie anhand der Zeichnung. Diese zeigt in:
- Figur 1a: eine Querschnittsansicht eines erfindungsgemäßen Kunststoffrohrs mit einer Vergrößerungsdarstellung des erfindungsgemäßen Korrosionsschutzmittels,
- Figur 1b: eine geschnittene Seitenansicht des erfindungsgemäßen Kunststoffrohres,
- Figur 2: eine perspektivische Darstellung der Opferanode und
- Figur 3: eine ausschnittsweise Darstellung der die Rohrwand durchsetzenden Opferanode.

In den Figuren sind gleiche oder gleichwirkende Bauteile mit gleichen Bezugszeichen gekennzeichnet.

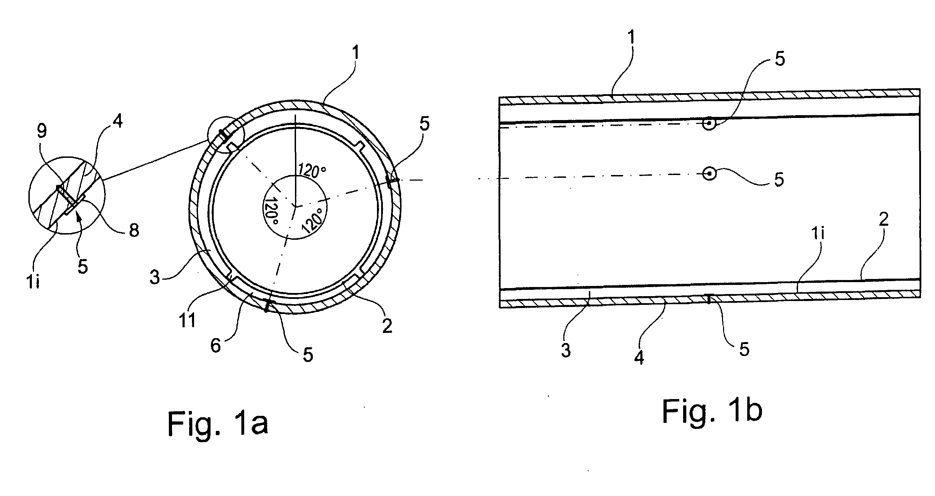

In der Figur 1a ist im Querschnitt ein Kunststoffrohr 1 erkennbar, das als Vortriebsrohr geeignet ist. Solche Rohre weisen häufig Durchmesser von mindestens 20cm, insbesondere mindestens 50cm, und Längen von mindestens 1m, insbesondere mindestens 3m auf. Im Kunststoffrohr 1 ist ein Metallrohr 2 aufnehmbar, das beispielsweise als Gasleitung dient. Das Metallrohr 2 weist an seinem Umfang vier Auskragungen 11 auf, damit das Metallrohr 2 überwiegend beabstandet zu einer Rohrinnenwand 1i des Kunststoffrohrs 1 ist, außer an den Auskragungen 11. Das Metallrohr 2 liegt somit durch die Schwerkraft bedingt an seinen unteren beiden Auskragungen 11 an der Rohrinnenwand 1 i an.

Zur Vermeidung von Korrosionen des Metallrohrs 2 sind am Umfang einer Rohrwand 4 des Kunststoffrohres 1, hier in einem Winkelabstand von 120° zueinander, drei Opferanoden 5 vorgesehen, die aus einem unedleren Metall als das Metall des Metallrohrs 2 bestehen.

Im Inneren 3 des Kunststoffrohrs 1 erfüllt bei Vorliegen von Feuchtigkeit diese Feuchtigkeit die Funktion eines Elektrolyts 6, wodurch eine etwaige Korrosion zumindest überwiegend, vorzugsweise vollständig, an den Opferanoden 5 erfolgt.

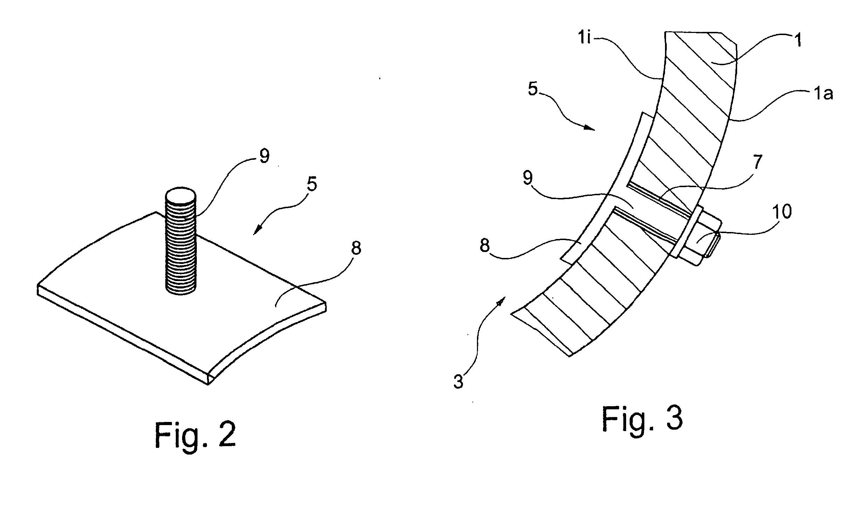

Die Opferanoden 5 durchsetzen mit einem Gewindestift 9 eine Buchse 7 der Rohrwand 4 (siehe Figur 3), so dass die Opferanoden quasi integral in der Rohrwand 4 ausgebildet sind.

Gehalten wird der Gewindestift 9 der Opferanode 5 durch eine an der Rohrinnenwand 1i anliegende Grundplatte 8, die vorzugsweise einstückig mit dem Gewindestift 9 ausgebildet ist und eine Mutter 10, die an einer Rohraußenwand 1a des Kunststoffrohrs 1 anliegt.

Besonders vorteilhaft ist eine Ausführungsform, bei der der Gewindestift direkt mit einem Innengewinde an der Rohrwand 4 verschraubt ist. Erfindungsgemäß ist es von Vorteil, wenn gemäß einer Ausführungsform statt des Gewindestifts 9 ein einfacher Stift ohne Gewinde, insbesondere ohne Grundplatte 8, vorgesehen ist, der mit der Rohrwand 4 in der Buchse 7 verklebt ist.

Entlang des Kunststoffrohrs 1 sind die Opferanoden 5 vorzugsweise zentral angeordnet, so dass eine möglichst kurze Wegstrecke von der gesamten Rohrlänge bis hin zu den Opferanoden 5 gewährleistet ist. Gemäß einer alternativen Ausführungsform können mehrere Gruppen von Opferanoden entlang dem Kunststoffrohr 1 gleichmäßig verteilt sein, um eine optimale Funktion der Opferanoden 5 zu gewährleisten.

### Bezugszeichenliste

- 1: Rohr
- 1i: Rohrinnenwand
- 1a: Rohraußenwand
- 2: Metallrohr
- 3: Inneres
- 4: Rohrwand
- 5: Opferanode
- 6: Elektrolyt
- 7: Buchse
- 8: Grundplatte
- 9: Gewindestift
- 10: Mutter
- 11: Auskragungen

## Patentansprüche

1. Rohr zur Aufnahme eines Metallrohres (2) im Inneren des Rohres (1), wobei das Rohr (1) mindestens ein eine Rohrwand (4) des Rohres (1) durchsetzendes Korrosionsschutzmittel zum Schutz des Metallrohres (2) vor Korrosion aufweist, das als Opferanode (5) für das Metallrohr (2) ausgebildet ist, **dadurch gekennzeichnet, dass** die Rohrwand (4) mindestens eine Grewindebuchse (7) sowohl zur Aufnahme der Opferanode (5) als auch zur Aufnahme von Injektionsdüsen aufweist.

2. Rohr nach Anspruch 1, wobei die Opferanode (5) mit dem Metallrohr (2) elektrisch leitend verbunden ist, insbesondere durch ein Elektrolyt (6).

3. Rohr nach Anspruch 1, wobei die Opferanode (5) aus einer Grundplatte (8) zur Anlage an einer Rohrinnenwand (1i) des Rohres (1), einem mit der Grundplatte (8) verbundenen, insbesondere als Gewindestift (9) ausgebildeten, Durchsetzungsabschnitt und einem, insbesondere als Mutter (10) ausgebildeten, Fixiermittel gebildet ist.

4. Rohr nach einem der Ansprüche 1 bis 3, wobei mehrere, insbesondere drei, Opferanoden (5) an dem Umfang des Kunststoffrohres (1) verteilt vorgesehen sind,

5. Rohr nach einem der Ansprüche 1 bis 4, bei dem die Opferanode (5) ohne Fremdstrom betreibbar ist.

6. Rohr nach einem der Ansprüche 1 bis 5, bei dem die Opferanode (5) aus einem unedlen Metall gebildet ist.

7. Rohr nach einem der Ansprüche 1 bis 6, bei dem die Opferanode (5) ein geringeres elektrochemisches Potential als das Metallrohr (2) aufweist.

## Claims

1. A pipe for accommodating a metal pipe (2) within the pipe (1), the pipe (1) having at least one anticorrosion means which penetrates one pipe wall (4) of the pipe (1) for protection of the metal pipe (2) against corrosion and which is made as a sacrificial anode (5) for the metal pipe (2), **characterized in that** the pipe wall (4) has at least one threaded sleeve (7) both for accommodating the sacrificial anode (5) and also for accommodating injection nozzles.

2. The pipe as claimed in Claim 1, wherein the sacrificial anode (5) is connected to the metal pipe (2) in an electrically conductive manner, especially by an electrolyte (6).

3. The pipe as claimed in Claim 1, wherein the sacrificial anode (5) is formed from a base plate (8) for contact with the inner wall (1i) of the pipe (1), a penetration section which is made especially as a threaded pin (9) and which is connected to the base plate (8), and a fixing means which is made especially as a nut (10).

4. The pipe as claimed in one of Claims 1 to 3, wherein there are several, especially three, sacrificial anodes (5) distributed on the periphery of the plastic pipe (1).

5. The pipe as claimed in one of Claims 1 to 4, wherein the sacrificial anode (5) can be operated without impressed current.

6. The pipe as claimed in one of Claims 1 to 5, wherein the sacrificial anode (5) is formed from a base metal.

7. The pipe as claimed in one of Claims 1 to 6, wherein the sacrificial anode (5) has a smaller electrical potential than the metal pipe (2).

## Revendications

1. Tube destiné à recevoir un tube métallique (2) à l'intérieur du tube (1), le tube (1) présentant au moins un agent anticorrosion traversant une paroi tubulaire (4) du tube (1), servant à protéger le tube métallique (2) de la corrosion et se présentant sous forme d'une anode sacrifiée (5) pour le tube métallique (2), **caractérisé en ce que** la paroi tubulaire (4) présente au moins un manchon fileté (7) destiné aussi bien à recevoir l'anode sacrifiée (5) qu'à recevoir des buses d'injection.

2. Tube selon la revendication 1, dans lequel l'anode sacrifiée (5) est reliée en conduction d'électricité au tube métallique (2), en particulier par un électrolyte (6).

3. Tube selon la revendication 1, dans lequel l'anode sacrifiée (5) est constituée d'une plaque de base (8) venant en contact avec une paroi intérieure (Ii) du tube (1), d'une section traversante reliée à la plaque de base (8), en particulier se présentant sous forme d'une tige filetée (9), et d'un moyen de fixation se présentant en particulier sous forme d'un écrou (10).

4. Tube selon une des revendications 1 à 3, dans lequel plusieurs, en particulier trois, anodes sacrifiées (5) sont prévues réparties sur la circonférence du tube en plastique (1).

5. Tube selon une des revendications 1 à 4, dans lequel l'anode sacrifiée (5) peut fonctionner sans courant extérieur.

6. Tube selon une des revendications 1 à 5, dans lequel l'anode sacrifiée (5) est formée d'un métal non noble.

7. Tube selon une des revendications 1 à 6, dans lequel l'anode sacrifiée (5) présente un potentiel électrochimique inférieur à celui du tube métallique (2).
